# EUROPÄISCHE PATENTSCHRIFT

(11) **EP 1 436 130 B1**
(45) Veröffentlichungstag und Bekanntmachung des Hinweises auf die Patenterteilung: **07.02.2007**
(21) Anmeldenummer: 02782945.6
(22) Anmeldetag: 17.10.2002
(51) Int. Cl.: B29B 9/14, B29C 45/00

(54) **VERFAHREN ZUR GRANULATHERSTELLUNG**
METHOD FOR PRODUCING GRANULES
PROCEDE POUR LA PRODUCTION DES GRANULES

(30) Priorität: 17.10.2001 DE 10151369
(43) Veröffentlichungstag der Anmeldung: 14.07.2004
(73) Patentinhaber: Faurecia Innenraum Systeme GmbH, 76767 Hagenbach (DE); Fraunhofer-Gesellschaft zur Förderung der angewandten Forschung e.V., 80686 München (DE)
(72) Erfinder: GASSAN, Jochen, 37269 Eschwege (DE); EINSIEDEL, Rudolf, 37242 Bad Sooden-Allendorf (DE); FINK, Hans-Peter, 14513 Teltow (DE); WEIGEL, Peter, 14532 Kleinmachnow (DE)
(74) Vertreter: Pfenning, Meinig & Partner GbR
(86) Internationale Anmeldenummer: PCT/EP2002/011651
(87) Internationale Veröffentlichungsnummer: WO 2003/033227

(56) Entgegenhaltungen:
- EP-A- 0 360 430
- EP-A- 0 755 966
- EP-A- 0 865 891
- DE-A- 19 943 457
- US-A- 2 433 727
- PATENT ABSTRACTS OF JAPAN vol. 015, no. 105 (M-1092), 13. März 1991 (1991-03-13) & JP 03 001907 A (NIPPON STEEL CORP;OTHERS: 01), 8. Januar 1991 (1991-01-08)

## Beschreibung

Die vorliegende Erfindung betrifft ein Formteil insbesondere zur Verwendung in Kraftfahrzeuginnenräumen sowie ein Granulat zu dessen Herstellung.

Es ist bekannt, kunststoffhaltiges Granulat im Spritzgussverfahren zu Formteilen umzuschmelzen. So ist es z.B. üblich, für den Innenraum von Kraftfahrzeugen PC/ABS (Polycarbonat/Acrylvitril-Butadien-Styrol-Copolymere) zur Herstellung solcher Formteile zu verwenden. Dieser Werkstoff ist vor allem hinsichtlich seiner Tieftemperatur-Schlagzähigkeit von hohem Interesse.

Nachteilig hierbei sind jedoch die mangelnde Verfügbarkeit bzw. die hohe Kosten dieses Granulates. Außerdem ist die Recycling-Fähigkeit sowie die Styrolemission dieses Materials nicht befriedigend. Ein weiterer Nachteil ist die notwendige hohe Verarbeitungstemperatur von 260-290 Grad Celsius.

Es sind noch weitere Granulate zur Herstellung von Formteilen bekannt. So sind z.B. sogenannte Kurzfasergranulate bekannt, bei denen im Kunststoffgranulat Fasern mit einer Länge von unter 1 mm enthalten sind. Die aus diesem Material hergestellten Formteile haben jedoch den Nachteil, dass sie nur eine sehr niedrige Schlagzähigkeit aufweisen.

Außerdem ist es bekannt, Glasfasergranulat mit längeren Fasern als Grundlage für die Formteile zu verwenden. Diese haben jedoch den Nachteil, dass sie ein hohes spezifisches Gewicht haben und außerdem nicht wärmeformbeständig sind. Auch die Schlagzähigkeit bei tiefen Temperaturen ist nicht befriedigend.

In der EP 0 865 891 A wird ein Mischverfahren für das Einbringen von Naturfasern in eine polymere Matrix auf Basis einer Press- und Pelletiertechnologie beschrieben.

Die DE 199 43 457 A beinhaltet ein Verfahren zur Beschichtung von zellulosischen Fasern mit einem flammhemmenden Kopolyamid, wobei die Fasern als unidirektionale Verstärkung in Polymerplatten eingelegt oder ein Schnittfasern in eine Polymermatrix eingestreut werden.

Die US 20 433 727 A zeigt die Herstellung von Fasermischungen nach einer Airlaid-Technologie, aus denen durch anschließendes Aufschmelzen der thermoplastischen Komponente Formkörper hergestellt werden.

Die JP 03 00 197 A zeigt eine Technologie zur Glasfaserbeschichtung unter Verwendung eines in einer Nylonschmelze laufenden Kalanderwerkes.

Die EP 0 360 430 A zeigt die Einarbeitung von Glasfasern in eine Matrix.

Die EP 0 755 966 A zeigt die Tränkung von Fasern mit einem niedermolekularen Prepolymer mit anschließender Polymerisation.

Ausgehend von diesem Stand der Technik liegt der vorliegenden Erfindung die Aufgabe zugrunde, ein Formteil sowie ein Granulat zu dessen Herstellung bereitzustellen, welche sicherstellen, dass das Formteil kostengünstig auf der Basis frei erhältlicher Bestandteile herstellbar und trotzdem selbst bei niedrigen Temperaturen schlagzäh ist.

Diese Aufgabe wird durch ein erfindungsgemäßes Verfahren zur Herstellung von Granulat zur Herstellung von Formteilen gelöst.

Dadurch, dass bei dem erfindungsgemäßen Verfahren zur Herstellung von Granulat zur Herstellung von Formteilen Endlos-Regenerat-Zellulosefasern in einem Pultrusionsverfahren mit einem Matrixmaterial aus einem technischen Kunststoff sowie einem Haftvermittler ummantelt und anschließend granuliert werden, sowie nach einer anschließenden Trocknung nochmals extrudiert und erneut granuliert und getrocknet werden, werden die erwünschten Eigenschaften des späteren Formteils verwirklicht. So genannte technische Kunststoffe sind hierbei leicht erhältlich, dies gilt ebenso für den Haftvermittler sowie Faserteile aus Regenerat-Zellulose. Es hat sich gezeigt, dass insbesondere durch die Einbindung von Regenerat-Zellulose-Faserteilen bedeutende Vorteile z.B. im Kraftfahrzeugbau, aber auch auf anderen Gebieten erzielbar sind. Hiermit wird es möglich, den kompletten Innenausbau eines Kraftfahrzeuges aus einer geruchs- und emissionsarmen Materialfamilie herzustellen. Hierbei ist die Wiederverwendbarkeit im Sinne eines praktizierten Umweltschutzes und der EU-Altautoverordnung besonders hervorzuheben. Die für PC/ABS bestehenden Nachteile des Mangels an Verfügbarkeit und der hohen Kosten besteht nicht. Trotzdem ist das für Fahrzeuginnenraumteile günstige Eigenschaftsprofil von PC/ABS in Bezug auf die Zugfestigkeit, die Kerbschlagzähigkeit sowie den E-Modul praktisch gleichwertig austauschbar erreicht. Vorteilhaft ist insbesondere, dass die Verarbeitungstemperaturen durch praktisch beliebige Wahl des technischen Kunststoffes auf niedrigere Werte als bei PC/ABS gesenkt werden können.

Ganz wesentlich für die Erfindung ist, dass regenerierte Zellulosefasern zur Anwendung kommen. Diese weisen gegenüber Naturzellulosefasern bzw. auch recycelten Naturzellulosefasern entscheidende und sehr überraschende Unterschiede für die vorliegende Erfindung auf. Unter "Regenerat-Zellulose" wird vorliegend verstanden, dass diese aus Lösungen von Zellulose oder Zellulosederivaten durch Fällungsprozesse meist unter bestimmter Formgebung (Fasergewinnung) wiedergewonnene Zellulose ist. Ein besonderer Vorteil dieser Regenerat-Zellulose ist, dass diese in Endlosform erhältlich ist und außerdem ein extrem homogenes Eigenschaftsprofil aufweist, was bei Naturzellulose nicht der Fall ist. Sie ist leicht kommerziell erhältlich und bietet auch für das Granulat bzw. das aus dem Granulat erhaltene Formteil eine gleichbleibende Qualität.

Die regenerierten Zellulosefasern weisen, insbesondere auch im Gegensatz zu natürlichen Zellulosefasern bei einem späteren Formteil, den Vorteil auf, dass die Schlagzähigkeit des Formteil extrem verbessert ist, auch wenn die Festigkeit der Regenerat-Faser selbst nicht besser ist als bei vergleichbaren Naturfasern. Auch gegenüber Glasfaserformteilen ergibt sich selbst bei gleichem Volumen eine ähnliche Festigkeit des späteren Produkts, so dass insgesamt eine hohe Gewichtsersparnis gegeben ist. Vorteilhaft ist hierbei auch, dass Produkte aus Regenerat-Zellulosefasern ein sehr ausgeglichenes Eigenschaftsprofil sowie eine gleichmäßige "Aufmachung" aufweisen im Verhältnis zu Produkten aus Naturzellulosefasern, welche hier in einer größeren Bandbreite streuen.

Die sehr günstigen mechanischen Eigenschaften der Regenerat-Zelluloseformteile im Vergleich zur natürlichen Zellulose sind um so überraschender, wenn der Aufbau von Naturzellulose bzw. Regenerat-Zellulose verglichen wird (Zellulose II- gegen Zellulose I-Typ). Die hier theoretisch höheren mechanischen Eigenschaften der Naturzellulose kommen verblüffenderweise im erfindungsgemäßen Formteil bzw. Granulat nicht zur Geltung, insbesondere in bezug auf die Kerbschlagzähigkeit zeigen sich im Gegenteil hierzu verblüffende Vorteile der Regenerat-Zellulose.

Es ist vorteilhaft, dass der technische Kunststoff eine Verarbeitungstemperatur unterhalb 240 Grad Celsius, vorzugsweise unterhalb 200 Grad Celsius aufweist. Bei einem solchen technischen Kunststoff kann es sich um ein Polyolefin, ein Polyolefinderivat, PVC oder auch ein Polyamid handeln. Besonders vorteilhaft ist z.B. ein optimiertes PP mit einer Dichte von 0,905 g/cm³ und einem Schmelzindex (230 Grad Celsius, 50 Newton) von 170 dg/min (kommerziell erhältlich als Stamylan P 412 MN 10 der Firma DSM).

Vorliegend hat sich für die Regenerat-Zellulose eine Faser mit 1350 Filamenten und Titer 1,81 dtex (kommerziell erhältlich als Cordenka 700 - eingetragene Marke - des Herstellers Acordis) als günstig erwiesen. Hierbei handelt es sich um eine typische Hochleistungs-Zellulosefaser für den Einsatz als Reifencord. Hierbei ist ein Vorteil die deutlich höhere Festigkeit dieser Faser gegenüber textilen Viskosefasern.

Weitere geeignete Zelluloseregeneratfasern lassen sich nach dem Lyocell- und Carbamatverfahren herstellen.

Besonders geeignet sind Faserteile basierend auf einer Faser mit einer Zugfestigkeit von mehr als 400 MPa. Besonders hervorzuheben ist, dass die Reißdehnung der Faserteile sehr hoch sein kann und zwar mehr als 5 %, vorzugsweise mehr als 8 %, besonders vorzugsweise mehr als 10 % betragen kann. Dies ist ein großer Vorteil z.B. auch gegenüber Kevlar-Fasern (eingetragene Marke), welche bei einer etwa vergleichbaren Festigkeit eine sehr viel niedrigere Reißdehnung aufweisen. Z.B. weist die Regenerat-Zellulo-sefaser Cordenka 700 (eingetragene Marke) Werte von 1,496 g/cm³ Dichte, Zugfestigkeit 885 MPa, Zugmodul 27 GPa und einer Reißdehnung von 12 % auf.

Es sind so auch Fasern vom Lyocelltyp verwendbar.

Das im erfindungsgemäßen Verfahren hergestellte Granulat enthält vorzugsweise 10-90 Gewichtsprozent an Faserteilen, vorzugsweise 20-42 Gewichtsprozent, es sind auch 24-42 Gewichtsprozent möglich.

Dem Matrix-Material sind Haftvermittler zugefügt. Hierbei handelt es sich z.B. um Maleinsäure-Copolymerisat, Isocyanat-Derivate, Silane, Dimethylharnstoff (DHU), Polyvinylalkohol (PVAL), Polyvinylacetat (PVAC) oder dergleichen. Vorliegend haben sich zur Verbesserung der Faser-PP-Matrix-Haftung z.B. PP-Malein-Säureanhydrid-Pfropf-Copolymere (MAPP) bewährt. Im Granulat sind bis zu 10 Gewichtsprozent Haftvermittler, vorzugsweise 2-4 Gewichtsprozent Haftvermittler enthalten. Darüber hinaus enthält das Granulat vorzugsweise UV-Stabilisatoren oder weitere Additive. Hierbei können die UV-Stabilisatoren bereits im technischen Kunststoff enthalten sein oder auch als gesondertes Additiv zugegeben werden.

Das im erfindungsgemäßen Verfahren hergestellte Granulat soll vorteilhafterweise in Längen von 1-15 mm vorliegen, die darin enthaltenen Faserteile sollten entsprechend größer als 1 mm und bis zu 15 mm lang sein.

Kennzeichnend für das aus dem Granulat zu erzeugende Formteil ist, dass dieses aus aufgeschmolzenem erfindungsgemäßen Granulat im verfestigten Zustand besteht. Hierbei bietet es sich zur Großserienfertigung an, dass die Herstellung des Formteils in einem Spritzgussverfahren durchgeführt wird. Hierbei ist ein großer Vorteil gegenüber der Verarbeitung von PC/ABS, dass niedrigere Temperaturen beim Spritzguss notwendig sind. So ist es möglich, die maximale Temperatur des geschmolzenen Granulats (auf z.B. Basis von PP) auf 190-210 Grad Celsius, vorzugsweise 200 Grad Celsius zu begrenzen. Der Spritzdruck beträgt hierbei etwa 50-700 bar. Beim Formteil beträgt die Länge der Faserteilstücke vorzugsweise 1-8 mm. Um diese großen Längen zu erzielen, ist es wichtig, dass die im Granulat enthaltenen Faserteile nicht zu sehr geschädigt werden. Es ist eine faserschonende Spritzgussverarbeitung nötig, um die Größe der Faserteilstücke im späteren Formteil nicht zu klein werden zu lassen. Hierzu sind vom Langfaserspritzguss PP-EF bekannte Maßnahmen, wie etwa Wahl einer speziellen Schneckengeometrie bzw. von abgestimmten Verarbeitungsparametern möglich. Um das Eigenschaftsprofil von PC/ABS in Bezug auf die gute Schlagzähigkeit bei niedrigen Temperaturen zu erreichen, ist darauf zu achten, dass die Faserteilstücke möglichst länger als 2 mm lang sind, wobei besonders günstig ist, wenn zumindest 15-40 % der Faserteilstücke 1,5-5 mm lang sind.

Das aus dem mit dem im erfindungsgemäßen Verfahren hergestellten Granulat aufgebaute Formteil empfiehlt sich besonders für Instrumententafeln oder Türverkleidungen eines Kraftfahrzeuges in den bekannten Techniken (Hinterspritzen bzw. Spritzprägen). Selbstverständlich sind auch beliebige andere Teile hieraus herstellbar, wobei ein besonderer Vorteil der Erfindung darin liegt, dass hiermit kostengünstig geruchs- und emissionsarme Teile mit hoher Schlagzähigkeit bei niedrigen Temperaturen herstellbar sind. Neben kompletten Instrumententafeln ist es natürlich auch möglich, lediglich Teilbereiche (Inserts) aus dem im erfindungsgemäßen Verfahren hergestellten Material herzustellen.

Für die Herstellung des Granulates bietet sich insbesondere ein Pultrusionsverfahren an, bei dem eine Regenerat-Zellulosefaser mit einem technischen Kunststoff ummantelt wird. Hierbei ist besonders vorteilhaft, dass die Regenerat-Zellulosefaser als Endlosfaser vorliegen kann, welche in gleichmäßiger Qualität auf beliebiger Länge in der Pultrusionsdüse gleichmäßig beschichtet werden kann. Danach werden die entstandenen mit dem Matrixpolymer ummantelten Regenerat-Zellulosefaser-Stränge granuliert, d.h. d.h. in kleinere Abschnitte unterteilt und getrocknet. Es ist auch möglich, hiernach nochmals einen Extruderdurchlauf durchzuführen, welchem ein weiterer nachgeordnet wird. Vor einer Weiterverarbeitung in einem Spritzgussverfahren, durch welches ein erfindungsgemäßes Formteil hergestellt wird, sollte jedoch wiederum eine Abkühlung des entstandenen Granulates erfolgen. Ein Vorteil dieser Vorgehensweise ist die Einarbeitung von Zelluloseregeneratfasern einheitlicher Länge.

Zur Verdeutlichung der günstigen Eigenschaften des erfindungsgemäßen Materials im Vergleich mit dem bekannten PC/ABS dienen:
Figur 1 (diese stellt Kerbschlagzähigkeit, Zugfestigkeit sowie E-Modul dar) und
Figur 2 (diese stellt Schlagzähigkeit bzw. Kerbschlagzähigkeit bezogen auf die Temperatur des jeweiligen Materials dar).

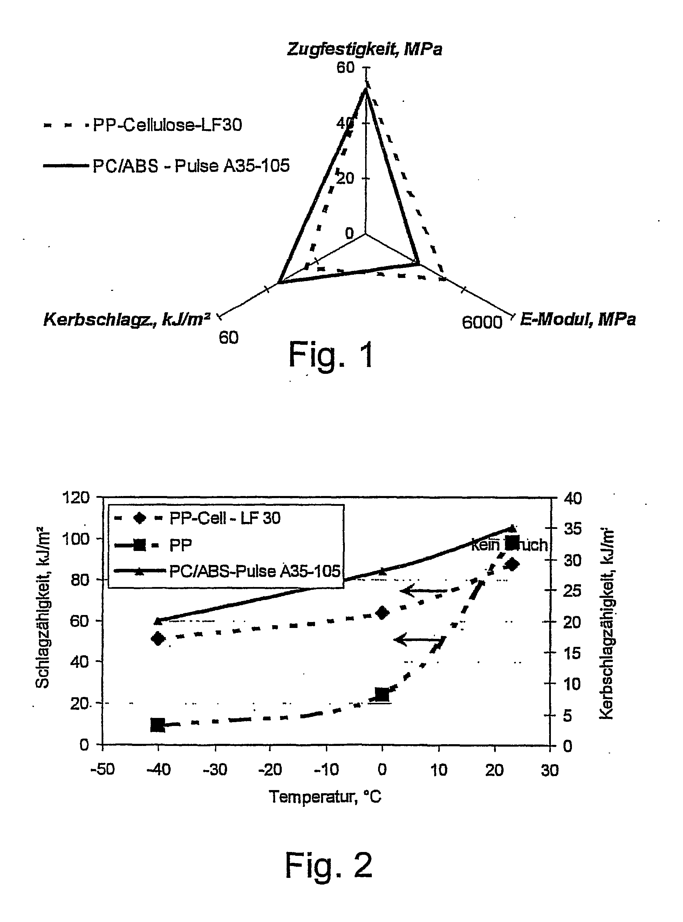

Figur 1 zeigt die Zugfestigkeit, Kerbschlagzähigkeit sowie dem E-Modul von erfindungsgemäßem PP-Zellulose-LF 30 (Zusammensetzung: PP Stamylan 67 Gew.%, Fusabond 3 Gew.%, Cordenka 30 Gew.%) sowie PC/ABS-Pulse A35/105 (Handelsname). Hierbei ist erkennbar, dass die Zugfestigkeit praktisch gleich ist (im Bereich zwischen 50 und 60 MPa). Der E-Modul ist für das erfindungsgemäße PP-Zellulose-Material sogar besser als für das entsprechende PC/ABS, hier liegt der E-Modul bei über 3.000 MPa. Auch die Kerbschlagzähigkeit liegt bei beiden Werkstoffen in einem ähnlichen Bereich. Hier liegen die Werte jeweils im Bereich von 30 kJoule/m², wobei der Wert der erfindungsgemäßen PP-Zellulose etwas unter dem von PC/ABS liegt.

Insgesamt ist jedoch festzustellen, dass das Eigenschaftsprofil sehr ähnlich ist. Günstig für den PP-Zellulose-Werkstoff ist hierbei die niedrigere Verarbeitungstemperatur von ca. 200 Grad Celsius.

Figur 2 zeigt die Schlagzähigkeit bzw. Kerbschlagzähigkeit von drei Materialien über einen Temperaturbereich von -40 bis etwa +20 Grad Celsius. Hierbei ist zu sehen, dass das erfindungsgemäße PP-Zellulose-Material sowie PC/ABS einen im wesentlichen glatten, nur leicht zu niedrigen Temperaturen abfallenden Verlauf zeigen. Im Gegensatz dazu ist bei reinem Polypropylen ein starker Abfall der Schlagzähigkeit bzw. Kerbschlagzähigkeit in zu niedrigen Temperaturen gegeben.

Bezüglich der Zahlenwerte bzw. näheren Einzelheiten zu den Verläufen wird ausdrücklich auf die Figuren 1 und 2 selbst verwiesen.

Die Herstellung eines erfindungsgemäßen Formteils basierend auf einem erfindungsgemäßen Granulat wird nun anhand eines Beispiels erläutert.

Für das Matrix-Material wird als technischer Kunststoff optimiertes PP-Block-Copolymer der Firma DSM Stamylan P 412 MN 10 mit einer Dichte von 0,905 g/cm³ und einem Schmelzindex (230 Grad Celsius, 50 Newton) von 170 dg/min gewählt. Das Matrix-Material enthält außerdem als Haftvermittler PP-Maleinsäureanhydrid-Propf-Copolymer (MAPP), in diesem Falle wird statistisches MAPP, Fusabond (eingetragene Marke) P von Du Pont mit einem Propfgrad größer 1% und einem Schmelzindex von 450 g/10min (190 Grad Celsius, 2,16 kg) eingesetzt und mit 3 Gewichtsprozent zum technischen Kunststoff zugegeben. Außerdem wurde zur Verstärkung die hochfeste Zellulosefaser Cordenka (eingetragene Marke) 700 von Acordis mit 1.350 Filamenten, Titer 1,81 dtex zugegeben.

Zur Herstellung des Granulats wird in einem ersten Schritt ein Pultrusionsverfahren angewendet, bei dem über eine Ummantelungsdüse eine vorgegeben Anzahl von Cordenka-Garnsträngen (praktisch endlos) mit dem aufgeschmolzenen PP-MAPP-Gemisch verbunden wird. Die Anzahl der Stränge bestimmte den Faseranteil, der zwischen 24 und 42 Gewichtsprozent lag. Als Extruder diente ein HAAKE-Rheocord 9000 mit PTW 25, die Verarbeitung erfolgte bei einer maximalen Extrudertemperatur von 215 Grad Celsius und einer Düsentemperatur von 200 Grad Celsius. Nach Abkühlen des Stranges wurde er unter Verwendung eines Granulators auf eine Länge von 2 mm geschnitten. Nach Trocknung (2 Stunden bei 85 Grad Celsius) wurde das Granulat in einem zweiten Schritt nochmals extrudiert (3 mm Lochdüse) und erneut granuliert und vor der weiteren Verarbeitung bei 85 Grad Celsius 4 Stunden getrocknet.

Die Formteile wurden schließlich mit Hilfe einer Spritzgießmaschine (Arburg-Allrounder 270 M 500-90) bei einer Spritztemperatur von 200 Grad Celsius und einem Spritzdruck von 400 bis 700 bar hergestellt.

## Patentansprüche

1. Verfahren zur Herstellung von Granulat zur Herstellung von Formteilen, **dadurch gekennzeichnet, dass** Endlos-Regenerat-Zellulosefasern in einem Pultrusionsverfahren mit einem Matrixmaterial aus einem technischen Kunststoff sowie einem Haftvermittler ummantelt und anschließend granuliert werden, sowie nach einer anschließenden Trocknung nochmals extrudiert und erneut granuliert und getrocknet werden.

2. Verfahren nach Patentanspruch 1, **dadurch gekennzeichnet, dass** das Pultrusionsverfahren ein- oder mehrstufig ist.

## Claims

1. Method for producing granules for producing moulded **characterised in that** continuous regenerated cellulose fibres are coated in a pultrusion process with a matrix material of an engineering plastic and an adherence promoter and then granulated, and after subsequent drying are extruded again and granulated and dried anew.

2. Method according to patent claim 1, **characterised in that** the pultrusion process has one or more stages.

## Revendications

1. Procédé pour la production de granulat pour la production de parties de moule, **caractérisé en ce que** des fibres de cellulose régénérées continues sont enrobées dans un procédé de pultrusion avec un matériel de matrice d'une matière plastique technique ainsi qu'un agent adhésif et puis granulés, et qu'elles sont de nouveau extrudés et encore une fois granulés et séchés après une séchage ultérieure.

2. Procédé selon la revendication 1, **caractérisé en ce que** c'est un procédé de pultrusion à un ou multi-étages.
